# EUROPEAN PATENT APPLICATION

(11) **EP 1 619 540 A1**
(43) Date of publication of application: **25.01.2006**
(21) Application number: 03723231.1
(22) Date of filing: 28.04.2003
(51) Int. Cl.: G02F 1/1333, G02F 1/133

(54) **DISPLAY DEVICE**

(71) Applicant: TOTOKU ELECTRIC CO., LTD., Tokyo 169-0072 (JP)
(72) Inventor: HASHIDUME, Hideki, Ueda-shi, Nagano 386-0192 (JP); HAYASHI, Shigeo, Ueda-shi, Nagano 386-0192 (JP); HATANAKA, Masao, Ueda-shi, Nagano 386-0192 (JP)
(74) Representative: Calderbank, Thomas Roger
(86) International application number: PCT/JP2003/005494
(87) International publication number: WO 2004/097510

(57) **Abstract**

A display device, wherein a mounting substrate (21) having a projected part (21b) projected from a part of a base part (21a) toward a display surface (11a) is installed on a frame (12) through a mounting fitting (30), a brightness sensor (22) is installed on the projected part (21b) of the mounting substrate (21), and the distance (z) thereof from the display surface (11a) is reduced to less than 1.75 mm.

## Description

### Field of the Invention

The present invention relates to a display device and more particularly to a display device wherein the brightness of its display surface can be measured accurately with a brightness sensor while controlling the effect of external light or the dispersion of the position of the brightness sensor.

### Background of the Invention

A display device is known in which a brightness sensor is provided for measuring and automatically controlling the brightness of the display surface of the display device (for example, as disclosed in Europe Patent Publication EP1274066A1).

However, the brightness of the display surface can not be measured accurately due to the effect of the dispersion of the position of the brightness sensor and the external light.

An object of the present invention is to provide a display device wherein the brightness of the display surface can be measured accurately with a brightness sensor while controlling the effect of external light or the dispersion of the position of the brightness sensor.

### Disclosure of the Invention

As a first feature of the present invention, a display device is comprising: a display unit having a display surface; a mounting substrate having a base portion mounted directly or via a mounting fitting to a frame of the display unit and a projected part projecting from a part of the base portion towards the display surface; and a brightness sensor mounted on the projected part to face the display surface.

For protecting the display surface of the display unit from injury, there is provided a gap of , for example, approximate 2 mm between the display surface and the frame of the display unit. The frame of the display unit has a thickness of, for example, 0.5 mm to 2 mm for maintaining the physical strength. Accordingly, when the mounting substrate is mounted to the front side (facing the outside) of the frame of the display unit and the brightness sensor having a thickness of, for example, 0.75 mm is mounted to the back side (facing the display surface) of the mounting substrate, the distance between the display surface and the brightness sensor is in the range from 1.75 mm to 3.25 mm. As explained later, the distance is too great to disregard the effect of external light or the dispersion of the position of the brightness sensor. Also, when the mounting substrate is mounted to the front side of the frame of the display unit, the fine adjustment of the distance is impossible. Therefore, when the mounting fitting is mounted to the frame of the display unit and the mounting substrate is mounted to the back side of the mounting fitting, the fine adjustment of the distance is possible due to the mounting condition of the mounting fitting. However, as the distance increases further, the effect of the external light or the dispersion of the position of the brightness sensor increases.

According to the first feature of the present invention, the display device has the mounting substrate provided with the projected part projecting from a part of the base portion towards the display surface and the brightness sensor mounted on the projected part. As a result, even if the mounting substrate is mounted directly or via the mounting fitting to the frame of the display unit, the distance between the display surface and the brightness sensor can be smaller than 1.75 mm. Hence, as described later, the effect of external light or the dispersion of the position of the brightness sensor can be controlled. Also, since the mounting substrate is mounted via the mounting fitting, the distance can finely adjusted by the mounting condition of the mounting fitting.

As a second feature of the present invention, the display device may be modified in which the mounting substrate is a stepped substrate in which the projected part is thicker than the base part (21a).

Since the display device of the second feature has the stepped substrate which can be made at higher precision, its overall dimensions can be increased in the accuracy.

As a third feature of the present invention, the display device may be modified in which the distance z (mm) between the display surface and the brightness sensor is expressed by 0≤z≤1.6.

Since the display device of the third feature allows the distance z between the brightness sensor and the display surface to be not greater than 1.6 mm, it can control the effect of external light or the dispersion of the position of the brightness sensor.

As a fourth feature of the present invention, the display device may be modified in which having the mounting fitting mounted to the frame of the display unit, the mounting substrate mounted to the back side of the mounting fitting, and the brightness sensor mounted to the projected part of the mounting substrate and when the distance between the display surface and the front side of the frame is L1 (mm), the thickness of the brightness sensor is t (mm), and the thickness of the base portion of the mounting substrate is b (mm), the distance L2 (mm) between the display surface and the back side of the mounting fitting is expressed by L1+b≤L2 and the height d of the projected part from the base portion is expressed by L2-b-t-1.6≤d≤L2-b-t.

Since the display device of the fourth feature also allows the distance z between the brightness sensor and the display surface to be not greater than 1.6 mm, it can control the effect of external light or the dispersion of the position of the brightness sensor.

As a fifth feature of the present invention, the display device may be modified in which the distance z (mm) between the display surface and the brightness sensor is expressed by 0≤z≤1.

Since the display device of the fifth feature allows the distance z between the brightness sensor and the display surface to be not greater than 1 mm, it can control the effect of external light or the dispersion of the position of the brightness sensor.

As a sixth feature of the present invention, the display device may be modified in which having the mounting fitting mounted to the frame of the display unit, the mounting substrate mounted to the back side of the mounting fitting, and the brightness sensor mounted to the projected part of the mounting substrate and when the distance between the display surface and the front side of the frame is L1 (mm), the thickness of the brightness sensor is t (mm), and the thickness of the base portion of the mounting substrate is b (mm), the distance L2 (mm) between the display surface and the back side of the mounting fitting is expressed by L1+b≤L2 and the height d of the projected part from the base portion of the mounting substrate is expressed by L2-b-t-1≤d≤L2-b-t.

Since the display device of the sixth feature allows the distance z between the brightness sensor and the display surface to be not greater than 1 mm, it can control the effect of external light or the dispersion of the position of the brightness sensor.

As a seventh feature of the present invention, the display device may be modified in which when the sensitivity of the brightness sensor to the incident light received along the optical axis of the brightness sensor is 100 %, the brightness sensor has a sensitivity of 90 % or higher to the incident light falling at an angle of 20 degrees from the optical axis and a sensitivity of 70 % or higher to the incident light falling at an angle of 40 degrees from the optical axis.

When the directivity of the brightness sensor is sharp, it is much influenced by the effect of the dispersion of the position of the brightness sensor and the external light.

Since the display device of the seventh feature has the brightness sensor having moderate directivity, it can control the effect of external light or the dispersion of the position of the brightness sensor. If it is influenced, it can be easily eliminated.

### Brief Description of the Drawings

Fig. 1 is a block diagram of a circuitry arrangement of a liquid crystal display device (100) showing a first embodiment of the present invention;
Fig. 2 is a front view of the appearance of the liquid crystal display device (100) of the first embodiment;
Fig. 3 is a front view of the appearance of the liquid crystal display device (100) of the first embodiment where a bezel (15) has been removed;
Fig. 4 is a front view of the primary part showing a mounting substrate (21) mounted via a mounting fitting (30) to a frame (12);
Fig. 5 is a side cross sectional view of the primary part showing the mounting substrate (21) mounted via the mounting fitting (30) to the frame (12);
Fig. 6 illustrates a side view and a rear view of the mounting substrate (21);
Fig. 7 is a graph showing a character of the directive sensitivity of a brightness sensor (22);
Fig. 8 is a block diagram showing an arrangement for measuring the effect of external light and the mounting position of the brightness sensor (22);
Fig. 9 is a graph showing a result of the measurements when the external light is not shielded;
Fig. 10 is a graph showing a result of the measurements when the external light is shielded;
Fig. 11 is a graph showing a difference in the measurement between the result shown in Fig. 9 and the result shown in Fig. 10;
Fig. 12 is a view equivalent to Fig. 3, showing a second embodiment of the present invention;
Fig. 13 is a view equivalent to Fig. 5, showing the second embodiment of the present invention;
Fig. 14 is a view equivalent to Fig. 7, showing the third embodiment of the present invention; and
Fig. 15 is an explanatory view showing the angle of incident light on the brightness sensor.

### Preferred Embodiments of the Invention

The present invention will be described in more detail in the form of embodiments referring to the relevant drawings. It would be understood that the present invention is not limited to the embodiments.

### (First Embodiment)

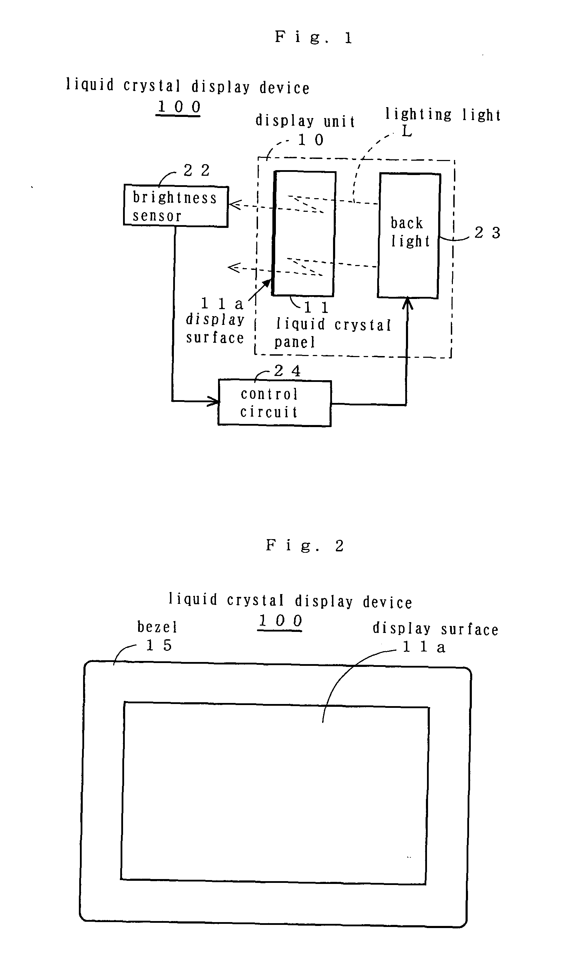

Fig. 1 is a block diagram of a circuitry arrangement of a liquid crystal display device (100) showing the first embodiment of the present invention.

The liquid crystal display device (100) comprises a display unit (10) including a liquid crystal panel (11) and a back light (23), a brightness sensor (22) disposed to face the display surface (11a) of the liquid crystal panel (11), and a control circuit (24) provided for controlling the intensity of the back light (23) in response to the brightness of the display surface (11a) measured with the brightness sensor (22).

Fig. 2 is a front view showing an external arrangement of the liquid crystal display device (100) .

The edge part of the display surface (11a) is covered with a bezel (15).

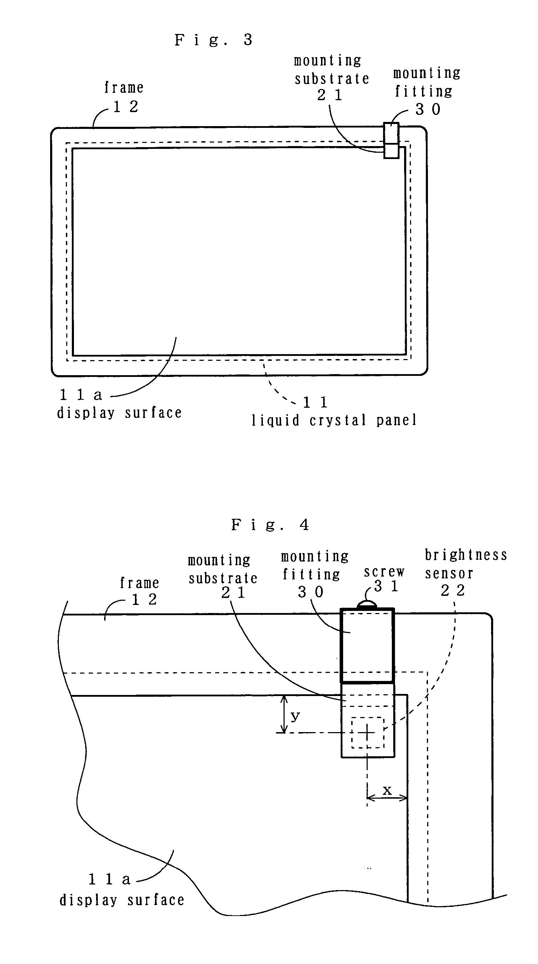

Fig. 3 is a front view of the liquid crystal display (100) where the bezel (15) has been removed.

The edge part of the display surface (11a) is covered with a frame (12) . A mounting substrate (21) is mounted via a mounting fitting (30) to the frame (12). The frame (12) and the mounting fitting (30) may be fabricated by sheet metal working.

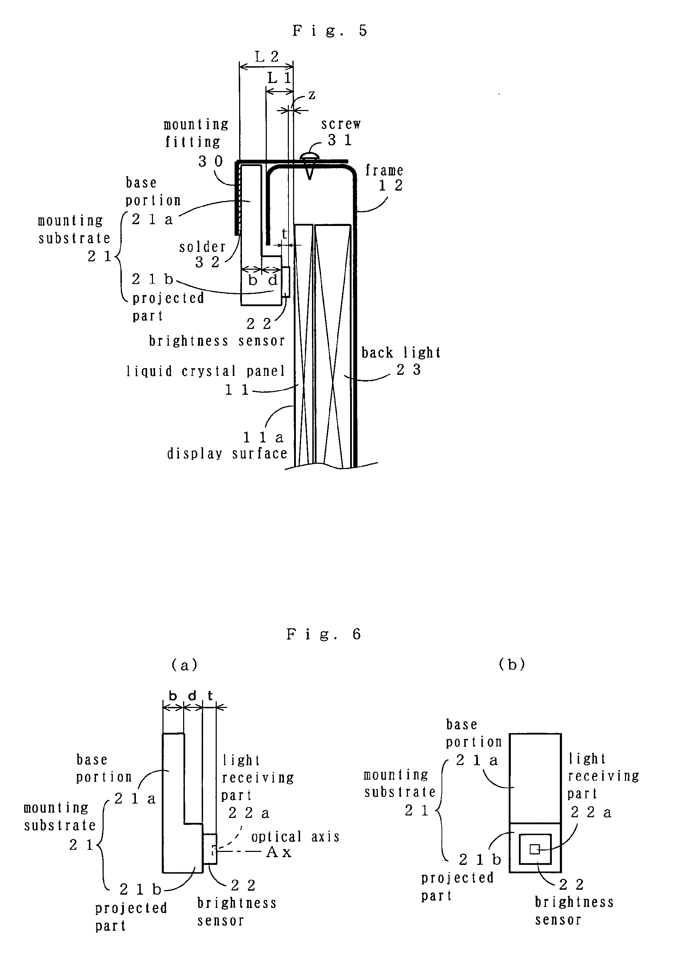

As shown in Figs. 4 and 5, the horizontal portion of the L shaped mounting fitting (30) is mounted to the upper side of the frame (12) with a screw (31) and the vertical portion of the mounting fitting hangs down over an upper portion of the display surface (11a). The front side of the base portion (21a) of the mounting substrate (21) is attached with the solder (32) to the back side of the vertical portion of the mounting fitting (30). The brightness sensor (22) of a chip form which is faced to the display surface (11a) is mounted to the projected part (21b) of the mounting substrate (21).

As shown in Fig. 4, the center of the brightness sensor (22) is spaced from the edge of the frame (12) by a distance x (mm) along the horizontal and by a distance y (mm) along the vertical.

Also as shown in Fig. 5, the distance between the display surface (11a) and the front side of the frame (12) is L1 (mm) and the distance between the display surface (11a) and the back side of the vertical portion of the mounting fitting (30) is L2 (mm). The thickness of the base portion (21a) of the mounting substrate (21) is b (mm), and the height of the projected part (21b) from the base portion (21a) is d (mm) . The thickness of the brightness sensor (22) is t (mm). The surface of the brightness sensor (22) is spaced by a distance z (mm) from the display surface (11a).

For example, L1=2, L2=3.25, b=1, d=0.5, t=0.75, and z=1 (mm). The thickness of the solder (32) is included in the distance L2. More particularly, L2 is determined by subtracting the thickness of the solder (32) from the actual distance between the display surface (11a) and the back side of the vertical portion of the mounting fitting (30).

As described later, 0≤z<1.75 is preferably or more preferably 0≤z≤1.6 or most preferably 0≤z≤1. In other words, L1+b≤L2, L2-b-t-1.75<d≤L2-b-t is preferably or more preferably L2-b-t-1.6≤d≤L2-b-t or most preferably L2-b-t-1≤d≤L2-b-t.

Since L1 and t are very low in the freedom, it is preferable to design L2, b and d in accordance with L1 and t in order to obtain the desirable z. As it is possible to finely adjust L2 in the range of the gap between the screw (31) and the screw hole provided in the mounting fitting (30), finally desirable z is determined by absorbing the dispersion of the dimension due to the fine adjustment of L2.

Fig. 6 illustrates a side view and a back view of the brightness sensor (22) and the mounting substrate (21).

The mounting substrate (21) is a stepped substrate in which the projected part (21b) is thicker than the base part (21a).

The brightness sensor (22) has a light receiving part (22a) provided at the center thereof. The optical axis (Ax) of the brightness sensor (22) extends perpendicularly to the surface of the same and across the light receiving part (22a).

The brightness sensor (22) is sized 2 mm long, 2.1 mm wide, and 0.75 mm thick.

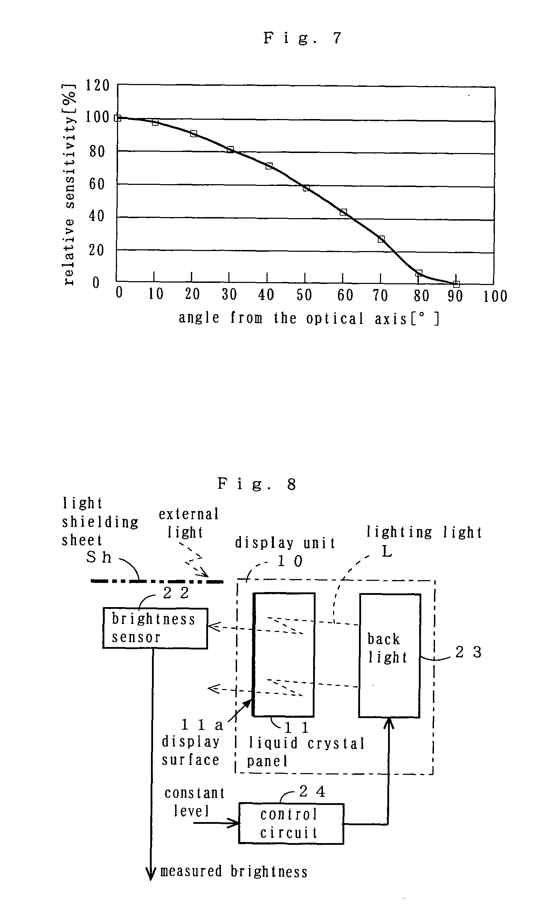

Fig. 7 is a graph showing the directivity of the sensitivity of the brightness sensor (22).

When the sensitivity to incident light along the optical axis (Ax) is 100 %, the sensitivity is 90 % or higher to the incident light falling at an angle of 20 degrees from the optical axis (Ax) and 70 % or higher to the incident light falling at an angle of 40 degrees from the optical axis (Ax), it has very moderate directivity.

With the brightness sensor (22) having a moderate directivity or no directivity, a fluctuation quantity of the measured brightness to the dispersion of x, y, z can be calculated and thus compensated through arithmetic operations.

Fig. 8 is a block diagram of a circuitry arrangement for measuring the relation of x, y to z shown in Fig. 4, and the relation of the external light to z.

A back light (23) is operated at a constant level. This allows the display surface (11a) to appear entirely in white.

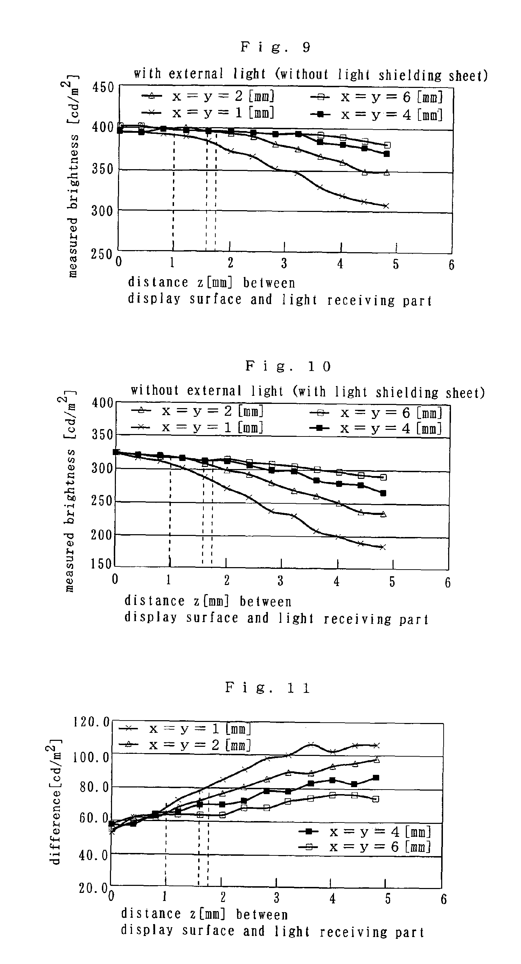

In the first measurement, without the light shielding sheet (Sh) and in the condition that the external light irradiates to the display surface (11a) , the measurement is done changing z in each case of x=y=1 , x=y=2, x=y=4 , and x=y=6. Fig. 9 illustrates a resultant measurement of the first measurement.

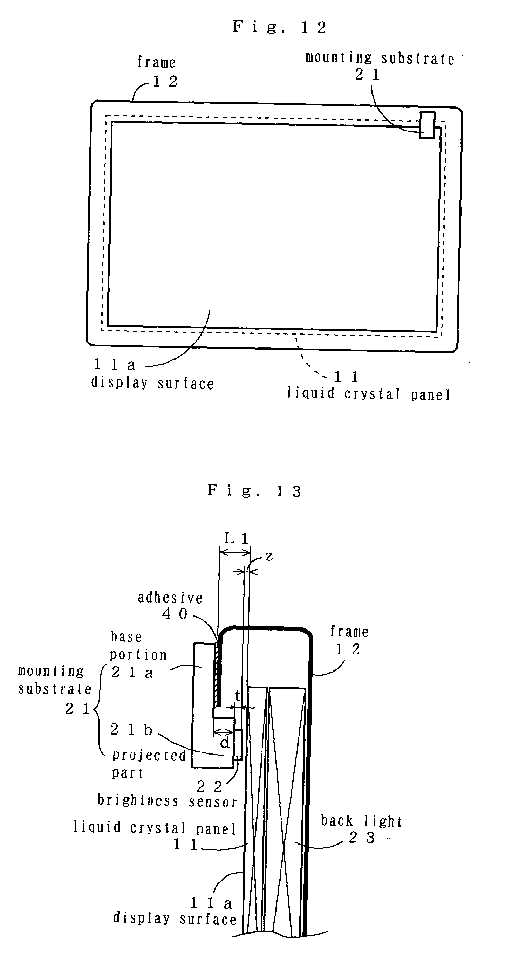

The followings are proved from the resultant measurement of the first measurement.
(1) When 0≤z<1.75, the brightness remains substantially unchanged regardless of the dispersion (mounting errors) of x and y provided 2≤x and 2≤y.
(2) When 0≤z≤1.6 , the brightness remains not higher than 10 % in the change regardless of the dispersion of x and y provided 1≤x and 1≤y.
(3) When 0≤z≤1, the brightness remains not higher than 5 % in the change regardless of the dispersion of x and y provided 1≤x and 1≤y.
   In the second measurement, with the light shielding sheet (Sh) and in the condition that the external light does not irradiate to the display surface (11a), the measurement is done changing z in each case of x=y=1, x=y=2, x=y=4, x=y=6. Fig. 10 illustrates a resultant measurement of the second measurement. Differences in the measurement between the first measurement and the second measurement are calculated and used for determining the effect of the external light. Fig. 11 illustrates a result of the difference calculation.
   The following is apparent from Fig. 11.
(4) When 0≤z≤1, the effect of the external light is not almost fluctuated regardless of the dispersion of x and y provided 1≤x and 1≤y.

As explained above, 0≤z<1.75 is preferably, more preferably 0≤z≤1.6, and most preferably 0≤z≤1.

And in considering of easy concealment with the bezel (15) and the mounting error, it is preferable that design position is x=y=2 to 3.

### (Second Embodiment)

As shown in Figs. 12 and 13, the base portion (21a) of the mounting substrate (21) may be bonded at the back side by an adhesive (40) to the front side of the frame (12).

As shown in Fig. 13, the distance between the display surface (11a) and the front side of the frame (12) is L1 (mm), and the height of the projected part (21b) of the mounting substrate (21) from the base portion (21a) is d (mm). The thickness of the brightness sensor (22) is t (mm). The distance between the surface of the brightness sensor (22) and the display surface (11a) is z (mm).

For example, L1=2.25, d=0.5, t=0.75, and z=1 (mm). The thickness of the adhesive (40) is included in the distance L1. More particularly, L1 (mm) is the sum of the actual distance between the display surface (11a) and the front surface of the frame (12) and the thickness of the adhesive (40).

As explained above, 0≤z<1.75 is preferably or more preferably 0≤z≤1.6 or most preferably 0≤z≤1. In other words, L1-t-1.75<d≤L1-t is preferably or more preferably L1-t-1.6≤d≤L1-t or most preferably L1-t-1≤d≤L1-t.

### (Third Embodiment)

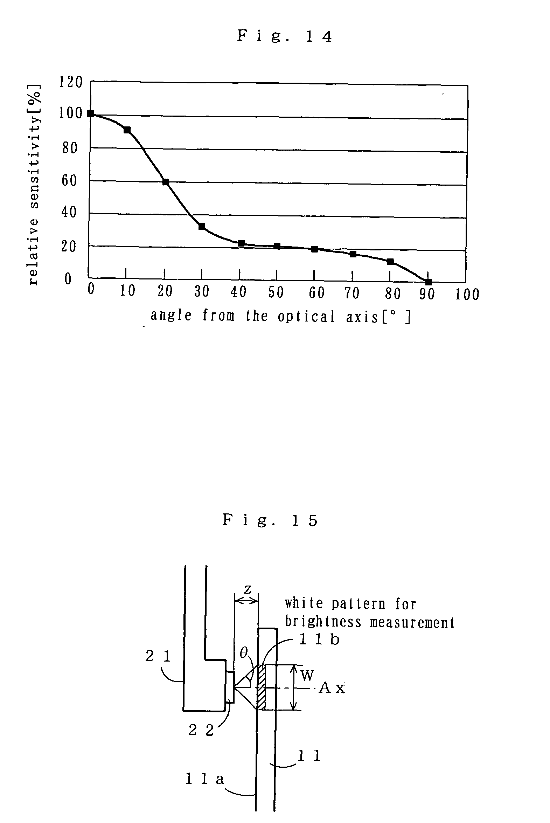

As shown in Fig. 14, when the sensitivity to incident light along the optical axis (Ax) is 100 %, the brightness sensor (22) may be provided, which has the directivity that the sensitivity to the incident light falling at an angle of 20 degrees from the optical axis (Ax) is substantially 60 % and to the incident light falling at an angle of 40 degrees from the optical axis (Ax) is substantially 20 %.

Generally, when using the brightness sensor (22) which has such a directivity, due to large fluctuation of the measured brightness value to the dispersion of x, y, z, it is difficult to compensate. However, in the directivity curve shown in Fig. 14, the change of the curve over 40 degree is moderate.

As shown in Fig. 15, if the distance z between the brightness sensor (22) and the display surface (11a) and the width W of a white pattern (11b) for brightness measurement are determined so that the angle *θ* of the incident light is 40 degree or larger, fluctuation of the measured brightness value to the dispersion of x, y, z, is small. As a result, fluctuation quantity can be calculated and compensated by the calculating.

For example, when W=2 mm and 0≤z≤1 , the expression is 45 degree ≤*θ* . Even if the brightness sensor (22) which has the directivity shown in Fig. 14 is used, it can stand the dispersion of x, y, z.

In general, if the brightness sensor has the directivity which the change of the directivity curve is moderate over the angle θ of the incident light, it is preferable to determine W and z so that the relation is expressed by θ≤sarctan{W/(2z)}.

### Possibility of the Industrial Use

The display device according to the present invention allows the brightness on its display surface to be measured accurately with a brightness sensor while controlling the effect of external light or the dispersion of the position of the installation of the brightness sensor. Accordingly, as the brightness can be maintained constant regardless of any change of the ambient temperature or any deterioration with time of the quality of the display unit, the display device can be preferably be employed for medical image diagnosis and so on.

## Claims

1. A display device comprising: a display unit having a display surface; a mounting substrate having a base portion mounted directly or via a mounting fitting to a frame of the display unit and a projected part projecting from a part of the base portion towards the display surface; and a brightness sensor mounted on the projected part to face the display surface.

2. A display device according to claim 1, wherein the mounting substrate is a stepped substrate increased greater in the thickness at the projected part than at the base portion.

3. A display device according to claim 1 or 2, wherein the distance z (mm) between the display surface and the brightness sensor is expressed by 0≤z≤1.6.

4. A display device according to claim 3, wherein having the mounting fitting mounted to the frame of the display unit, the mounting substrate mounted to the back side of the mounting fitting, and the brightness sensor mounted to the projected part of the mounting substrate and when the distance between the display surface and the front side of the frame is L1 (mm), the thickness of the brightness sensor is t (mm), and the thickness of the base portion of the mounting substrate is b (mm), the distance L2 (mm) between the display surface and the back side of the mounting fitting is expressed by L1+b≤L2 and the height d of the projected part projecting from the base portion is expressed by L2-b-t-1.6≤d≤L2-b-t.

5. A display device according to claim 1 or 2, wherein the distance z (mm) between the display surface and the brightness sensor is expressed by 0≤z≤1.

6. A display device according to claim 3, wherein having the mounting fitting mounted to the frame of the display unit, the mounting substrate mounted to the back side of the mounting fitting, and the brightness sensor mounted to the projected part of the mounting substrate and when the distance between the display surface and the front side of the frame is L1 (mm), the thickness of the brightness sensor is t (mm), and the thickness of the base portion of the mounting substrate is b (mm), the distance L2 (mm) between the display surface and the back side of the mounting fitting is expressed by L1+b≤L2 and the height d of the projected part from the base portion of the mounting substrate is expressed by L2-b-t-1≤d≤L2-b-t.

7. A display device according to any of claims 1 to 6, wherein when the sensitivity of the brightness sensor to the incident light received along the optical axis of the brightness sensor is 100%, the brightness sensor has a sensitivity of 90 % or higher to the incident light falling at an angle of 20 degrees from the optical axis and a sensitivity of 70 % or higher to the incident light falling at an angle of 40 degrees from the optical axis.
